# EUROPÄISCHE PATENTSCHRIFT

(11) **EP 2 560 834 B1**
(45) Veröffentlichungstag und Bekanntmachung des Hinweises auf die Patenterteilung: **22.06.2016**
(21) Anmeldenummer: 11718933.2
(22) Anmeldetag: 15.04.2011
(51) Int. Cl.: B60K 6/52, B60K 6/48, B60W 30/20

(54) **VORRICHTUNG ZUM BETREIBEN EINER ANTRIEBSEINHEIT EINES KRAFTFAHRZEUGS**
DEVICE FOR OPERATING A DRIVE UNIT OF A MOTOR VEHICLE
DISPOSITIF DE FONCTIONNEMENT POUR UNE UNITÉ D'ENTRAÎNEMENT D'UN VÉHICULE À MOTEUR

(30) Priorität: 19.04.2010 DE 102010015425
(43) Veröffentlichungstag der Anmeldung: 27.02.2013
(73) Patentinhaber: Audi AG, 85045 Ingolstadt (DE)
(72) Erfinder: MAIER, Ruben, 89542 Herbrechtingen (DE); KRUSE, Alexander, 85051 Ingolstadt (DE)
(74) Vertreter: Herbst, Matthias Heinz
(86) Internationale Anmeldenummer: PCT/EP2011/001917
(87) Internationale Veröffentlichungsnummer: WO 2011/131320

(56) Entgegenhaltungen:
- DE-A1-102006 039 400
- DE-A1-102008 041 693
- FR-A- 2 901 747

## Beschreibung

Die Erfindung betrifft eine Vorrichtung zum Betreiben einer Antriebseinheit eines Kraftfahrzeugs nach dem Oberbegriff des Patentanspruches 1.

Sowohl bei Fahrzeugen mit Verbrennungsmotoren als auch bei Fahrzeugen mit ausschließlichem bzw. teilweisem elektrischen Antrieb können starke, fahrerseitig vorgegebene Drehmomentsprünge zu Schwingungen im Antriebsstrang bzw. zu Lastschlägen führen, die als ein unkomfortables Fahrverhalten wahrgenommen werden können. Dies gilt insbesondere bei Momentensprüngen zwischen einer Betriebsphase ohne Momentenanforderung, das heißt einem Schubbetrieb, und einer Betriebsphase mit Momentenanforderung, das heißt einem Zugbetrieb.

Aus der DE 10 2007 013 253 A1 ist eine Vorrichtung zum Betreiben einer Antriebseinheit eines Kraftfahrzeuges bekannt. Die Vorrichtung erzeugt auf der Grundlage von fahrerseitigen Eingangsparametern Sollwerte, die zur Ansteuerung der Antriebseinheit verwendet werden. Die Antriebseinheit besteht im vorliegenden Fall aus einer Brennkraftmaschine sowie einer Elektromaschine. Die Vorrichtung erkennt dabei Betriebszustände, bei denen die Gefahr von Lastschlägen besteht. In diesem Fall bearbeitet die Vorrichtung die Sollwerte derart, dass Lastschläge gedämpft werden können.

Eine derartige Lastschlagdämpfung ist insbesondere bei Fahrzeugen mit einem Vorderachsantrieb sowie einem davon mechanisch entkoppelten Hinterachsantrieb problematisch. Bei einem solchen Antriebssystem können nämlich der Vorderachsantrieb und der Hinterachsantrieb auf Sollmomentsprünge mit unterschiedlicher Dynamik reagieren. Bei einem unterschiedlichen Ansprechverhalten des Vorderachsantriebes und des Hinterachsantriebes kann daher die Lastschlagdämpfung an der Vorderachse und an der Hinterachse nicht aufeinander abgestimmt erfolgen, wodurch sich ein unkomfortables Fahrgefühl ergeben kann.

Aus der DE 10 2008 041 693 A ist eine gattungsgemäße Vorrichtung zum Betreiben einer Antriebseinheit eines Kraftfahrzeugs bekannt. Bei Gefahr eines Lastschlages wird in der Vorrichtung von der ansonsten vorgesehenen Drehmomentverteilung abgewichen. Die beiden angetriebenen Achsen werden dann mit entsprechend veränderten Sollwerten beaufschlagt. Aus der DE 10 2006 039 400 A ist eine weitere Vorrichtung zum Betreiben einer Antriebseinheit eines Kraftfahrzeuges bekannt, bei der für einen Verbrennungsmotor und für einen Elektromotor unterschiedliche Filter vorgesehen sind, mit denen unterschiedliche Ansprechverhalten kompensiert werden sollen. Bei dieser Vorrichtung werden ein gemeinsames Signal einer Vergleichseinrichtung über Filter in Signale für Elektromotor- und Verbrennungsmotor aufgeteilt.

Die Aufgabe der Erfindung besteht darin, eine Vorrichtung zum Betreiben einer Antriebseinheit eines Kraftfahrzeuges bereitzustellen, bei dem insbesondere bei Fahrzeugen mit Vorderachsantrieb und Hinterachsantrieb eine für den Fahrzeuginsassen komfortable Lastschlagdämpfung durchführbar ist.

Die Aufgabe ist durch die Merkmale des Patentanspruches 1 gelöst. Bevorzugte Weiterbildungen der Erfindung sind in den abhängigen Ansprüchen offenbart.

Gemäß dem kennzeichnenden Teil des Patentanspruches 1 wird die erfindungsgemäße Vorrichtung in einem Fahrzeug eingesetzt, das einen Vorderachsantrieb und einen Hinterachsantrieb aufweist. Die erfindungsgemäße Vorrichtung erzeugt auf fahrerseitig vorgebbare Eingangsparameter einen ersten Sollwert bzw. ein erstes Sollmoment für den Vorderachsantrieb und einen zweiten Sollwert bzw. ein zweites Sollmoment für den Hinterachsantrieb.

Erfindungsgemäß ist keine zentrale Lastschlagdämpfungseinheit vorgesehen, sondern vielmehr ein erster Lastschlagdämpfungsfilter, der dem Vorderachsantrieb zugeordnet ist, und ein zweiter Lastschlagdämpfungsfilter, der dem Hinterachsantrieb zugeordnet ist. Der erste Lastschlagdämpfungsfilter kann daher das zum Vorderachsantrieb geführte erste Sollmoment modulieren, während der zweite Lastschlagdämpfungsfilter das zum Hinterachsantrieb geführte zweite Sollmoment modulieren kann.

Mit dem Sollmoment sollen auch sämtliche Sollwerte mit umfasst sein, aus denen sich Rad- oder Achsmomente herleiten lassen. Beispielhaft sei eine Antriebsleistung oder eine von der Antriebsleistung hergeleitete Größe erwähnt.

Aufgrund des ersten und des unabhängig davon arbeitenden zweiten Lastschlagdämpfungsfilters können Lastschlagdämpfungseingriffe an der Vorderachse oder an der Hinterachse unabhängig voneinander erfolgen. Somit kann zum Beispiel an einer der beiden Fahrzeugachsen eine Lastschlagdämpfung durchgeführt werden, während an der anderen Fahrzeugachse keine Lastschlagdämpfung erfolgt. Alternativ dazu kann die Lastschlagdämpfung an der Vorderachse zeitlich versetzt zur Lastschlagdämpfung an der Hinterachse erfolgen, um bestimmte Fahreigenschaften zu erreichen.

Der erste und der zweite Lastschlagdämpfungsfilter weisen zumindest ein Ermittlungsglied oder unabhängig voneinander arbeitende, separate Ermittlungsglieder auf, die erkennen, ob für die Vorderachse oder für die Hinterachse eine Lastschlag-Gefahr vorliegt. Eine solche Lastschlag-Gefahr ergibt sich beispielhaft bei einem Lastwechsel des Vorder- oder Hinterachsantriebes zwischen einem Schubbetrieb und einem Zugbetrieb. Alternativ oder zusätzlich dazu kann eine Lastschlag-Gefahr bei größeren Sollmomentsprüngen gegeben sein, bei denen der Fahrer schlagartig eine hohe Momentenanforderung vorgibt.

Der erste und der zweite Lastschlagdämpfungsfilter können zudem jeweils ein Modulierglied aufweisen, mit dem die fahrerseitige Sollmomentenvorgabe im Hinblick auf eine Dämpfung des Lastschlages moduliert wird. Im Falle des oben genannten Lastwechsels zwischen dem Zugbetrieb und dem Schubbetrieb kann hierbei im Bereich eines Momentennulldurchgangs der Momentengradient reduziert werden. Dies kann beispielhaft dadurch erfolgen, dass dem Momentensprung im Bereich des Momentennulldurchgangs eine Parabel zweiten Grades aufgeprägt wird.

Für den Fall, dass das Ermittlungsglied keine Lastschlag-Gefahr erkennt, kann das Sollmoment das Modulierglied überbrücken und ohne Modulierung zum Vorderachsantrieb oder zum Hinterachsantrieb geführt werden.

Die vorliegende Erfindung ist insbesondere bei Fahrzeugen einsetzbar, deren Vorderachsantrieb und Hinterachsantrieb unabhängig voneinander sowie mechanisch entkoppelt sind. In diesem Fall sind daher die Vorderachse und die Hinterachse nicht durch einen gemeinsamen Antriebsstrang antreibbar, sondern unabhängig voneinander durch die beiden oben genannten Achsantriebe.

Unter Achsantrieb ist dabei eine Brennkraftmaschine und/oder eine Elektromaschine zu verstehen. Die Brennkraft- und Elektromaschinen können dabei alternativ oder in Kombination als Achsantrieb vorgesehen sein. Beispielhaft kann der Vorderachsantrieb mit einer Brennkraftmaschine sowie einer Elektromaschine realisiert werden. Unabhängig von diesem Vorderachsantrieb kann der Hinterachsantrieb eine weitere Elektromaschine aufweisen. Alternativ dazu kann der Achsantrieb eine Kombination aus Brennkraftmaschine und Elektromaschine aufweisen oder eine Kombination aus zwei Elektromaschinen. Die Ansteuerung des Vorderachsantriebes und des Hinterachsantriebes erfolgt hierbei nicht über einen gemeinsamen Antriebsstrang sondern über voneinander getrennte Antriebsstränge.

Mittels der oben genannten Eingangsparameter kann die Vorrichtung zunächst ein Summenmoment bestimmen, das einer Momentenverteilungseinheit zugeführt werden kann. Diese teilt das Summenmoment in Abhängigkeit beispielsweise von einer Fahrerassistenzregelung, etwa einer Allradregelung, einer Fahrdynamikregelung oder einer Fahrgeschwindigkeitsregelung oder dergleichen, in das bereits genannte erste Sollmoment für den Vorderachsantrieb und in das zweite Sollmoment für den Hinterachsantrieb auf.

Wie bereits oben erwähnt, können die Vorderachs- und Hinterachsantriebe unterschiedliche Aggregate, das heißt Brennkraft- oder Elektromaschinen aufweisen, wodurch sich bei Sollmomentvorgaben ein unterschiedliches zeitliches Ansprechverhalten des Vorderachsantriebes und des Hinterachsantriebes ergeben kann. Vor diesem Hintergrund ist es für ein komfortables Fahrverhalten von Bedeutung, dass die voneinander separat durchgeführten Lastschlagdämpfungen an der Vorderachse sowie an der Hinterachse aufeinander abgestimmt erfolgen.

Hierzu kann dem ersten und dem zweiten Lastschlagdämpfungsfilter zumindest ein Zeitglied zugeordnet sein. Mit dem Zeitglied kann ein Zeitversatz unter Berücksichtigung des unterschiedlichen zeitlichen Ansprechverhaltens von Vorder- und Hinterachsantrieb definiert werden. Der Zeitversatz kann dabei so bemessen sein, dass die Lastschlagdämpfung an der Vorderachse sowie an der Hinterachse gleichzeitig erfolgt. Alternativ dazu kann der Zeitversatz jedoch auch so definiert sein, dass die Lastschlagdämpfung an der Vorderachse sowie an der Hinterachse zeitlich verzögert zueinander zu unterschiedlichen Zeitpunkten stattfindet. Dadurch kann gegebenenfalls ein bestimmtes, vom Fahrer gewünschtes Fahrverhalten, etwa während eines Sportmodus, eingestellt werden.

Nachfolgend ist ein Ausführungsbeispiel der Erfindung anhand der beigefügten Figuren beschrieben.

Es zeigen:
- Fig. 1: in schematischer Ansicht ein Antriebssystem eines Kraftfahrzeugs;
- Fig. 2: ein Blockschaltdiagramm, das ausgehend von einer fahrerseitigen Momentenvorgabe eine Signalverarbeitung bis zur Erzeugung eines gefilterten Sollmoments für den Vorderachsantrieb und eines gefilterten Sollmoments für die Hinterachsantrieb veranschaulicht; und
- Fig. 3: ein Momenten-Zeit-Diagramm, in dem ein fahrerseitig vorgegebener Sollmomentsprung sowie die im Hinblick auf eine Lastschlagdämpfung modulierten Sollmomentverläufe für den Vorderachsantrieb und für den Hinterachsantrieb gezeigt sind.

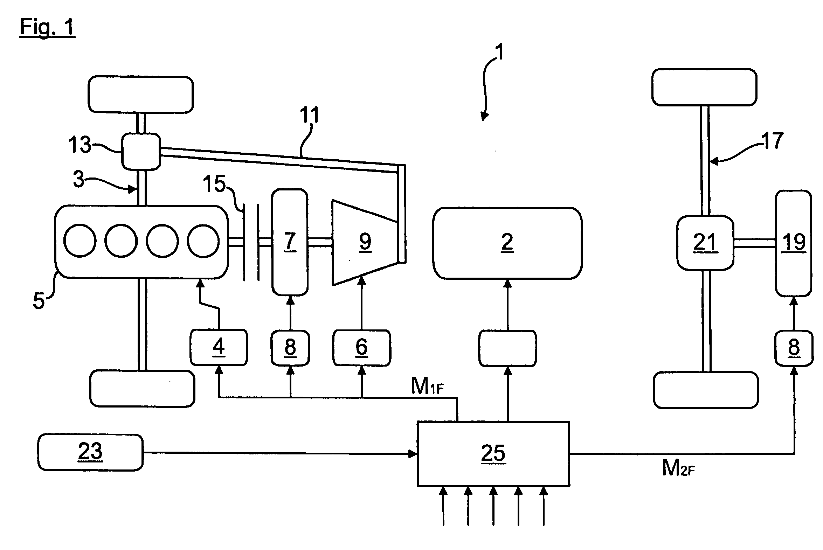

In der Fig. 1 ist in einer Prinzipdarstellung das Antriebssystem eines Hybridfahrzeuges gezeigt, das mit einer Allradantriebseinheit 1 versehen ist. An der vorderen Fahrzeugachse 3 ist eine Brennkraftmaschine 5 sowie eine Elektromaschine 7 in einen Antriebsstrang geschaltet und mit einem Getriebe 9 in Verbindung. Das Getriebe 9 ist über eine Getriebeausgangswelle 11 sowie ein nun angedeutetes Achsdifferenzial 13 in trieblicher Verbindung mit der Vorderachse 3. Zwischen der Brennkraftmaschine 5 und der Elektromaschine 7 ist eine Kupplung 15 geschaltet, die je nach Fahrsituation geöffnet oder geschlossen ist.

An der Hinterachse 17 des Kraftfahrzeuges ist eine weitere Elektromaschine 19 angeordnet, die die beiden hinteren Fahrzeugräder über ein Achsdifferenzial 21 antreibt.

Soweit es für das Verständnis der Erfindung erforderlich ist, sind in der Fig. 1 der aus der Brennkraftmaschine 5 und der Elektromaschine 7 bestehende Vorderachsantrieb und des aus der Elektromaschine 19 bestehende Hinterachsantrieb skizziert. Weitere Antriebskomponenten, etwa die Hochvoltbatterie 2 zur Stromversorgung der beiden Elektromaschinen 7, 19, oder etwa das Motorsteuergerät 4, das Getriebesteuergerät 6 oder die Leistungselektronik 8 der beiden Elektromaschinen 7, 19, sind dagegen aus Gründen der Übersichtlichkeit ohne nähere Beschreibung nur grob angedeutet.

So ist gemäß der Fig. 1 ein Fahrpedalmodul 23 in Signalverbindung mit einer zentralen Steuereinrichtung 25. Die zentrale Steuereinrichtung 25 erfasst zusätzlich eine Vielzahl hier nicht näher beschriebener Eingangsparameter, wobei auf der Grundlage eines vom Pedalmodul 23 übermittelten Fahrerwunschmomentes und dieser Eingangsparameter der Vorderachsantrieb 5, 7 mit einem ersten gefilterten Sollmoment M_{1F} und der Hinterachsantrieb 19 mit einem zweiten Sollmoment M_{2F} ansteuerbar ist.

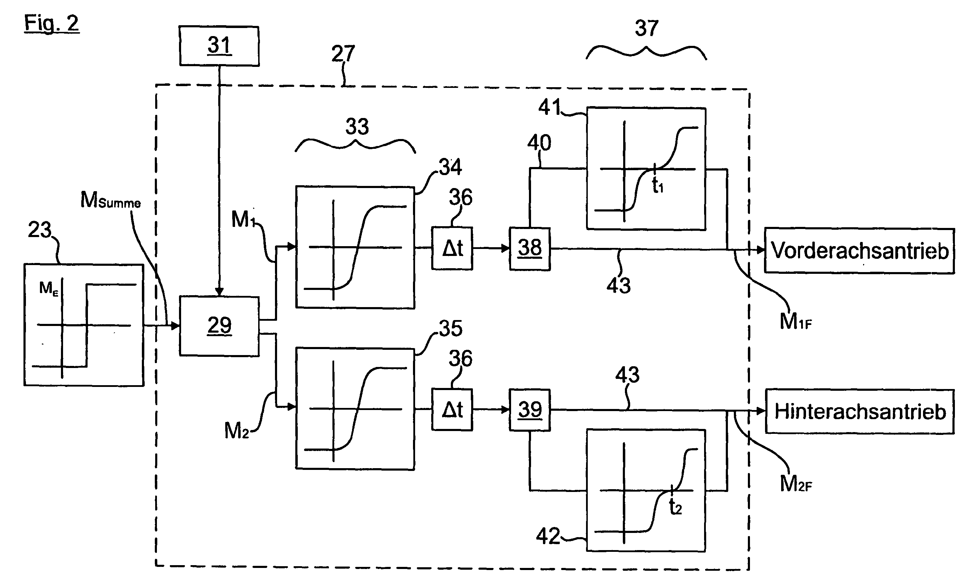

Der zum Verständnis der Erfindung erforderliche Signalverlauf zwischen dem Pedalmodul und dem Vorderachsantrieb 5, 7 sowie dem Hinterachsantrieb 19 ist in der Fig. 2 vereinfacht dargestellt. Demzufolge wird einer in der Steuereinrichtung 25 integrierten Vorrichtung 27 vom Pedalmodul 23 ein Fahrerwunschwert als Sollwert zugeführt. Dabei handelt es sich um ein Drehmoment, eine Leistung oder eine aus dem Drehmoment oder der Leistung abgeleitete Größe. Im vorliegenden Fall entspricht der Sollwert einem Summenmoment M_{Summe}, das einer Momentenverteilungseinheit 29 der Vorrichtung 27 zugeführt wird. Die Momentenverteilungseinheit 29 teilt das Summenmoment M_{Summe} in Abhängigkeit von an sich bekannten Eingangsparametern in ein Sollmoment M₁ für den Vorderachsantrieb 5, 7 und in ein Sollmoment M₂ für den Hinterachsantrieb 19 auf. Die Aufteilung des Summenmomentes M_{Summe} erfolgt gemäß der Fig. 2 unter Berücksichtigung einer Fahrerassistenzregelung 31.

Die weitere Signalverarbeitung der von der Momentenverteilungseinheit 29 aufgeteilten Sollmomente M₁, M₂ wird gemäß der Fig. 2 in voneinander unabhängigen, parallelen Bearbeitungssträngen durchgeführt, in denen die Sollmomente M₁, M₂ in einer Tiefpassfiltereinheit 33 und in einer Lastschlagdämpfungseinheit 37 gefiltert werden können, so dass entsprechend gefilterte Sollmomente M_{1F}, M_{2F} zum Vorderachsantrieb 5, 7 und zum Hinterachsantrieb 19 weitergeleitet werden.

In der in der Fig. 2 gezeigten Vorrichtung 27 sind die Bearbeitungsstränge zur Filterung der Sollmomente M₁, M₂ beispielhaft identisch ausgelegt. Nachfolgend wird sich daher auf die Signalverarbeitung des zum Vorderachsantrieb 5, 7 geführten Sollmoments M₁ beschränkt. So wird das Sollmoment M₁ zunächst einem ersten Tiefpassfilter 34 der Tiefpassfiltereinheit 33 zugeführt. Der Tiefpassfilter 34 kann beispielhaft ein Proportional-Zeit-Glied sein, dessen Zeitverhalten derart ist, dass z.B. eine fahrerseitige Eingangs-Sprungfunktion geglättet werden kann, wie es weiter unten noch beschrieben wird.

Im weiteren Signalverlauf wird das Sollmoment M₁ zu einem Zeitglied 36 geleitet, mit dem das Sollmoment M₁ gegebenenfalls erst mit zeitlicher Verzögerung weitergeleitet wird. Dem Zeitglied 36 folgt in Signalverlaufsrichtung die Lastschlagdämpfungseinheit 37.

Diese weist zunächst eine Ermittlungseinheit 38 auf, von der eine Bypass-Signalleitung 40 mit einem darin geschalteten Lastschlagdämpfungsfilter 41 und eine Hauptleitung 43 abzweigt. In der Ermittlungseinheit 38 wird ermittelt, ob für die Vorderachse 3 eine Lastschlag-Gefahr vorliegt. Eine solche kann sich etwa bei einem Lastwechsel des Vorderachsantriebes 5, 7 oder des Hinterachsantriebes 19 für den Fall ergeben, dass von einem Schubbetrieb in einen Zugbetrieb übergegangen wird.

Die nach der Ermittlungseinheit 38 folgende Hauptleitung 43 überbrückt den Lastschlagdämpfungsfilter 41, wobei die Bypass-Signalleitung 40 nach dem Lastschlagdämpfungsfilter 41 wieder in die Hauptleitung 43 rückgeführt ist. Die Hauptleitung 43 ist weiterhin in Signalverbindung mit dem Vorderachsantrieb 5, 7, der mit dem in der Tiefpassfiltereinheit 33 und in der Lastschlagdämpfungseinheit 37 gefilterten Sollmoment M_{1F} angesteuert wird.

Der Signalverlauf des Sollmoments M₂ von der Momentenverteilungseinheit 29 in Richtung auf den Hinterachsantrieb 19 ist gemäß der Fig. 2 identisch mit dem oben angegebenen Signalverlauf des Sollmoments M₁ ausgeführt.

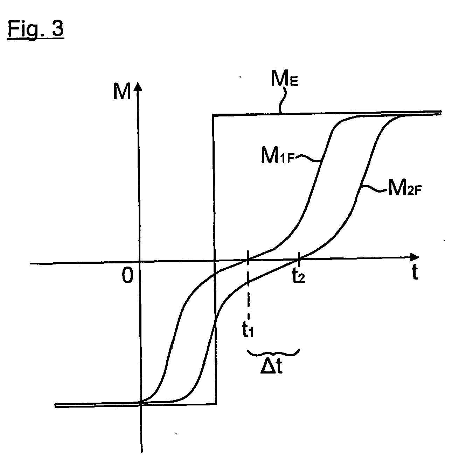

In den Fig. 2 und 3 ist beispielhaft eine Fahrsituation gezeigt, bei der durch Betätigung des Fahrpedals 23 eine fahrerseitige Sprungfunktion erzeugt wird. In der gezeigten Sprungfunktion wechselt ein Eingangsmoment M_{E} schlagartig von einem Schubbetrieb ohne Momentenanforderung in einen Zugbetrieb mit Momentenanforderung. Die in den Fig. 2 und 3 gezeigte Sprungfunktion verläuft daher durch einen Momenten-Nulldurchgang, das heißt durch die Abszisse des Momenten-Zeit-Diagramms.

Der vom Fahrer vorgegebene Momentensprung wird in der Momentenverteilungseinheit 29 in das erste Sollmoment M₁ für den Vorderachsantrieb 5, 7 und in das zweite Sollmoment M₂ für den Hinterachsantrieb 19 aufgeteilt. Die beiden Sollmomente M₁, M₂ werden dabei zunächst in den ersten und zweiten Tiefpassfiltern 34, 35 geglättet. Anschließend kann mittels der Zeitglieder 36 ein Zeitversatz Δt zwischen dem am Vorderachsantrieb 5, 7 stattfindenden Momentenaufbau und dem am Hinterachsantrieb 13 stattfindenden Momentenaufbau vorgegeben werden. Ein solcher Zeitversatz trägt dem Umstand Rechnung, dass der Vorderachsantrieb 5, 7 aufgrund der darin verwendeten Brennkraftmaschine 5 ein zeitlich trägeres Ansprechverhalten aufweist, und zwar im Vergleich zu dem Hinterachsantrieb 19, der lediglich eine Elektromaschine aufweist.

Der Zeitversatz Δt kann unter Berücksichtigung dieser Unterschiede im zeitlichen Ansprechverhalten so bemessen sein, dass es zu keinem unkomfortablen Fahrverhalten kommt, wenn der Vorderachsantrieb 5, 7 und der Hinterachsantrieb 19 mit den gefilterten Sollmomenten M_{1F}, M_{2F} beaufschlagt werden.

Im weiteren Signalverlauf erkennt die Ermittlungseinheit 38, 39, ob eine Lastschlag-Gefahr vorliegt oder nicht. Wird in der Ermittlungseinheit 38, 39 eine Lastschlag-Gefahr erkannt, so kann dem bereits geglätteten Sollmomentensprung im Lastschlagdämpfungsfilter 41, 42 im kritischen Momentennulldurchgang ein reduzierter Momentengradient aufgeprägt werden. Anschließend wird der so gefilterte Momentensprung als gefiltertes Sollmoment M_{1F}, M_{2F} zum Vorderachsantrieb 5, 7 bzw. zum Hinterachsantrieb 19 weitergeleitet.

Eine weitere beispielhafte Fahrsituation geht von dem Fall aus, dass zunächst kein Allradeingriff erfolgt, sondern das gesamte Summenmoment M_{Summe} von der Momentenverteilungseinheit 29 als das erste Sollmoment M₁ auf den Vorderachsantrieb 5, 7 geleitet wird. In diesem Fall befindet sich der Vorderrachsantrieb 5, 7 also im Zugbetrieb, während der Hinterachsantrieb 19 mitgeschleppt wird und daher im Schubbetrieb, etwa einem Rekuperationsbetrieb, arbeitet.

Für den Fall, dass die Fahrerassistenzregelung 31 einen Schlupf an der Vorderachse 13 erkennt, wird das Summenmoment M_{Summe} zumindest teilweise von der Momentenverteilungseinheit 29 auf die Hinterachse 17 umverteilt. Durch diese Momentenumverteilung erfolgt am Hinterachsantrieb 19 ein Lastwechsel vom Schubbetrieb in den Zugbetrieb, wodurch das dem Hinterachsantrieb 19 zugeordnete Ermittlungsglied 39 eine Lastschlag-Gefahr erkennt. Entsprechend wird das zur Hinterachse 17 umverteilte Sollmoment M₂ einer Lastschlagdämpfungs-Filterung im Lastschlagdämpfungsfilter 42 unterworfen.

Im Unterschied zur Hinterachse 17 kann dabei an der Vorderachse 3 die Reduzierung des Sollmomentes M₁ derart gering sein, dass das der Vorderachse 3 zugeordnete Ermittlungsglied 38 keine Lastschlag-Gefahr feststellt. An der Vorderachse 3 erfolgt daher keine Lastschlagdämpfung. Analog zu der oben erläuterten Momentenumverteilung kann sich in anderen Fahrsituationen auch eine Momentenumverteilung von der Hinterachse 17 zur Vorderachse 3 ergeben. Hierbei kann gegebenenfalls lediglich an der Vorderachse 3 eine Lastschlagdämpfung durchführbar sein, während die Hinterachse 17 ohne Lastschlagdämpfung angetrieben wird.

## Patentansprüche

1. Vorrichtung zum Betreiben einer Antriebseinheit (1) eines Kraftfahrzeugs, die auf der Grundlage von insbesondere fahrerseitigen Eingangsparameter (M_{Summe}) Sollwerte (M₁, M₂) zur Ansteuerung der Antriebseinheit (1) erzeugt, welche Vorrichtung (27) eine Lastschlagdämpfungseinheit (37) aufweist, die bei Lastschlag-Gefahr die Sollwerte (M₁, M₂) zur Dämpfung von Lastschlägen bearbeitet, wobei mittels der Vorrichtung (27) ein erster Sollwert (M₁) für einen Vorderachsantrieb (5, 7) und ein zweiter Sollwert (M₂) für einen Hinterachsantrieb (19) erzeugbar ist, und wobei
die Lastschlagdämpfungseinheit (37) in einen ersten Lastschlagdämpfungsfilter (41) zur Bearbeitung des zum Vorderachsantrieb (5,7) geführten ersten Sollwerts (M₁) und in einen zweiten Lastschlagdämpfungsfilter (42) zur Bearbeitung des zum Hinterachsantrieb (19) geführten zweiten Sollwerts (M₂) unterteilt ist,
**dadurch gekennzeichnet, dass** der erste und der zweite Lastschlagdämpfungsfilter (41, 42) zumindest ein Ermittlungsglied (38, 39) aufweist, das ermittelt, ob für die Vorderachse (3) oder für die Hinterachse (17) eine Lastschlag-Gefahr vorliegt.

2. Vorrichtung nach Anspruch 1, **dadurch gekennzeichnet, dass** der erste und der zweite Lastschlagdämpfungsfilter (41, 42) jeweils ein Modulierglied aufweist, das bei Vorliegen einer Lastschlag-Gefahr für die Vorderachse (3) oder die Hinterachse (17) den ersten oder zweiten Sollwert (M₁, M₂) bearbeitet.

3. Vorrichtung nach Anspruch 1 oder 2, **dadurch gekennzeichnet, dass** der Vorderachsantrieb (5, 7) und der Hinterachsantrieb (17) voneinander mechanisch entkoppelt ist.

4. Vorrichtung nach einem der vorhergehenden Ansprüche, **dadurch gekennzeichnet, dass** den ersten und zweiten Lastschlagdämpfungsfiltern (41, 42) eine Momentenverteilungseinheit (29) vorgeschaltet ist, die ein Summenmoment (M_{Summe}) in das Sollmoment (M₁) für den Vorderachsantrieb (5, 7) und das Sollmoment (M₂) für den Hinterachsantrieb (19) aufteilt.

5. Vorrichtung nach einem der vorhergehenden Ansprüche, **dadurch gekennzeichnet, dass** den ersten und/oder zweiten Lastschlagdämpfungsfiltern (41, 42) zumindest ein Zeitglied (36) zugeordnet ist, mit dem eine Lastschlagdämpfung an der Vorderachse (3) gegenüber einer Lastschlagdämpfung an der Hinterachse (17) mit einem Zeitversatz (Δt) durchführbar ist.

6. Vorrichtung nach Anspruch 5, **dadurch gekennzeichnet, dass** der Vorderachsantrieb (5, 7) und der Hinterachsantrieb (19) jeweils ein unterschiedliches zeitliches Ansprechverhalten aufweisen, wobei der Zeitversatz (Δt) so bemessen ist, dass die Lastschlagdämpfung an der Vorderachse (3) und die Lastschlagdämpfung an der Hinterachse (7) aufeinander abgestimmt ist, und insbesondere gleichzeitig erfolgt.

7. Vorrichtung nach einem der vorhergehenden Ansprüche, **dadurch gekennzeichnet, dass** der Vorderachsantrieb (5, 7) und der Hinterachsantrieb (19) jeweils zumindest eine Elektromaschine (7, 19) und/oder eine Brennkraftmaschine (5) aufweist.

8. Vorrichtung nach einem der vorhergehenden Ansprüche, **dadurch gekennzeichnet, dass** das Ermittlungsglied (38, 39) bei einem Wechsel des Vorderachs- oder Hinterachsantriebs (5, 7, 19) zwischen Schubbetrieb und Zugbetrieb eine Lastschlag-Gefahr erkennt.

## Claims

1. An apparatus for operating a drive unit (1) of a motor vehicle, which generates target values (M₁, M₂) for controlling the drive unit (1) on the basis of in particular driver-side input parameters (Mₛᵤₘ), which apparatus (27) has a load impact damping unit (37) that processes, in case of danger of a load impact, the target values (M₁, M₂) for damping load impacts, wherein by means of the apparatus (27), a first target value (M₁) for a front axle drive (5, 7) and a second target value (M₂) for a rear axle drive (19) can be generated, and wherein
the load impact damping unit (37) is divided into a first load impact damping filter (41) for processing the first target value (M₁) maintained regarding the front axle drive (5, 7) and a second load impact damping filter (42) for processing the second target value (M₂) maintained for the rear axle drive (19), **characterised in that** the first and the second load impact damping filters (41, 42) have at least one determining element (38, 39) that determines whether a danger of a load impact is present for the front axle (3) or for the rear axle (17).

2. The apparatus as claimed in claim 1, **characterised in that** the first and the second load impact damping filters (41, 42) each have a modulating element that processes the first or second target value (M₁, M₂) in case a danger of a load impact for the front axle (3) or the rear axle (17) is present.

3. The apparatus as claimed in claim 1 or 2, **characterised in that** the front axle drive (5, 7) and the rear axle drive (17) are mechanically decoupled from each other.

4. The apparatus as claimed in any one of the preceding claims, **characterised in that** the first and the second load impact damping filters (41, 42) have connected upstream thereof a torque distribution unit (29) that divides a sum torque (Mₛᵤₘ) into the target torque (M₁) for the front axle drive (5, 7) and the target torque (M₂) for the rear axle drive (19).

5. The apparatus as claimed in any one of the preceding claims, **characterised in that** the first and/or second load impact damping filters (41, 42) have associated therewith at least one timer element (36), by means of which load impact damping can be carried out on the front axle (3) with a time delay (At) relative to load impact damping on the rear axle (17).

6. The apparatus as claimed in claim 5, **characterised in that** the front axle drive (5, 7) and the rear axle drive (19) each have a different temporal response behaviour, wherein the time delay (At) is dimensioned such that the load impact damping on the front axle (3) and the load impact damping on the rear axle (7) are matched to each other and are in particular carried out at the same time.

7. The apparatus as claimed in any one of the preceding claims, **characterised in that** the front axle drive (5, 7) and the rear axle drive (19) each have at least one electric machine (7, 19) and/or an internal combustion engine (5).

8. The apparatus as claimed in any one of the preceding claims, **characterised in that** the determining element (38, 39) detects, in the case of a change of the front axle or rear axle drive (5, 7, 19), a load impact danger between overrun operation and traction operation.

## Revendications

1. Dispositif pour faire fonctionner une unité d'entraînement (1) d'un véhicule automobile, lequel dispositif produit des valeurs de consigne (m₁, M₂) pour la commande de l'unité d'entraînement (1) sur la base de paramètres d'entrée (M_{Summe}) notamment côté conducteur, lequel dispositif (27) comporte une unité amortisseuse de choc (37) qui, en cas de risque de choc, traite les valeurs de consigne (M₁, M₂) pour amortir des chocs,
tel que, au moyen du dispositif (27), une première valeur de consigne (M₁) peut être produite pour un entraînement d'essieu avant (5, 7) et une deuxième valeur de consigne (M₂) peut être produite pour un entraînement d'essieu arrière (19),
et tel que l'unité amortisseuse de choc (37) est divisée en un premier filtre amortisseur de choc (41) pour le traitement de la première valeur de consigne (M₁) envoyée à l'entraînement d'essieu avant (5, 7) et en un deuxième filtre amortisseur de choc (42) pour le traitement de la deuxième valeur de consigne (M₂) envoyée à l'entraînement d'essieu arrière (19),
**caractérisé en ce que** le premier et le deuxième filtre amortisseur de choc (41, 42) comportent au moins un élément de détermination (38, 39) qui détermine s'il existe un risque de choc pour l'essieu avant (3) ou pour l'essieu arrière (17).

2. Dispositif selon la revendication 1, **caractérisé en ce que** le premier et le deuxième filtre amortisseur de choc (41, 42) comportent chacun un élément modulateur qui, en présence d'un risque de choc pour l'essieu avant (3) ou l'essieu arrière (17), traite la première ou la deuxième valeur de consigne (M₁, M₂).

3. Dispositif selon la revendication 1 ou 2, **caractérisé en ce que** l'entraînement d'essieu avant (5, 7) et l'entraînement d'essieu arrière (17) sont découplés mécaniquement l'un de l'autre.

4. Dispositif selon l'une des revendications précédentes, **caractérisé en ce qu'**il est placé en amont des premier et deuxième filtres amortisseurs de choc (41, 42) une unité de répartition de moment (29) qui divise un moment total (M_{Summe}) en un moment de consigne (M₁) pour l'essieu avant (5, 7) et un moment de consigne (M₂) pour l'essieu arrière (19).

5. Dispositif selon l'une des revendications précédentes, **caractérisé en ce qu'**il est associé aux premier et deuxième filtres amortisseurs de choc (41, 42) au moins un temporisateur (36) avec lequel un amortissement de choc sur l'essieu avant (3) est effectué avec un certain décalage temporel (Δt) par rapport à un amortissement de choc sur l'essieu arrière (17) .

6. Dispositif selon la revendication 5, **caractérisé en ce que** l'entraînement d'essieu avant (5, 7) et l'entraînement d'essieu arrière (19) comportent chacun un mode de réponse temporel différent, le décalage temporel (Δt) étant dimensionné de telle sorte que l'amortissement de choc sur l'essieu avant (3) et l'amortissement de choc sur l'essieu arrière (7) sont accordés l'un à l'autre, et notamment s'effectuent simultanément.

7. Dispositif selon l'une des revendications précédentes, **caractérisé en ce que** l'entraînement d'essieu avant (5, 7) et l'entraînement d'essieu arrière (19) comportent chacun au moins un moteur électrique (7, 19) et/ou un moteur à combustion interne (5).

8. Dispositif selon l'une des revendications précédentes, **caractérisé en ce que** l'élément de détermination (38, 39) détecte un risque de choc lors d'un changement de l'entraînement d'essieu avant ou d'essieu arrière (5, 7, 19) entre un fonctionnement en poussée et un fonctionnement en traction.
